(19) Europäisches Patentamt
European Patent Office
Office européen des brevets

(11) Veröffentlichungsnummer: **0 133 519**
**A2**

(12) # EUROPÄISCHE PATENTANMELDUNG

(21) Anmeldenummer: **84108891.7**

(22) Anmeldetag: **27.07.84**

(51) Int. Cl.[4]: **C 08 L 79/08**
C 09 D 3/70

(30) Priorität: **06.08.83 DE 3328501**

(43) Veröffentlichungstag der Anmeldung:
**27.02.85 Patentblatt 85/9**

(84) Benannte Vertragsstaaten:
**AT CH DE FR GB IT LI SE**

(71) Anmelder: **BAYER AG**
**Konzernverwaltung RP Patentabteilung**
**D-5090 Leverkusen 1 Bayerwerk(DE)**

(72) Erfinder: **Jonas, Friedrich, Dr.**
**Krugenofen 15**
**D-5100 Aachen(DE)**

(72) Erfinder: **Müller, Richard, Dr.**
**Birkenweg 23**
**D-5090 Leverkusen 3(DE)**

(72) Erfinder: **Merten, Rudolf, Dr.**
**Berta-von-Suttner-Strasse 55**
**D-5090 Leverkusen(DE)**

(72) Erfinder: **Burgmer, Willy**
**Am Katterbach 70**
**D-5060 Bergisch-Gladbach 2(DE)**

(54) **Mischungen aus Polyamidimiden und Polyhydantoinen.**

(57) Die Erfindung betrifft Mischungen aus Polyamidimiden und Polyhydantoinen und gegebenenfalls Polyaminen. Diese Mischungen können als Bindemittel z.B für Einbrennlacke verwendet werden.

EP 0 133 519 A2

Croydon Printing Company Ltd

BAYER AKTIENGESELLSCHAFT 5090 Leverkusen, Bayerwerk

Konzernverwaltung RP
Patentabteilung Eck/ABc

# Mischungen aus Polyamidimiden und Polyhydantoinen

Die Erfindung betrifft Mischungen aus Polyamidimiden und Polyhydantoinen und gegebenenfalls Polyaminen. Diese Mischungen können als Bindemittel z.B. für Einbrennlacke verwendet werden.

Polyamidimide und Polyamidimide, die aromatische substituierte Polyhydantoine enthalten, können aufgrund ihrer mechanischen und chemischen Eigenschaften sowie ihrer Temperaturbeständigkeit als Überzüge, z.B. als Drahtlacke verwendet werden (z.B. DE-OS 2 230 165, 2 333 524, 1 5 95 646, 1 595 647).

Für manche Verwendungszwecke, z.B. für Innenbeschichtungen beispielsweise in Spraydosen, sind derartige Lacke nicht immer befriedigend oder aufgrund ihres Herstellungsverfahrens nicht verwendbar.

Ziel der Erfindung ist daher die Herstellung von Lackfilmen, die außer den günstigen Eigenschaften (z.B. Chemikalienbeständigkeit) der mitunter wenig elastischen Polyamidimidlacke eine den Polyhydantoinlacken vergleichbare Elastizität aufweisen, ohne deren ungünstige Eigenschaften (z.B. Phenolrückstände) zu besitzen.

Es wurde nun gefunden, daß Mischungen aus Polyamidimiden, Polyhydantoinen und gegebenenfalls Polyaminen gute elastische Eigenschaften und Chemiekalienbeständigkeit aufweisen. Dies war nicht zu erwarten, da die Chemikalienbeständigkeit der erfindungsgemäß verwendeten Polyhydantoine wesentlich geringer ist als die Chemikalienbeständigkeit der reinen Polyamidimide.

Gegenstand der Erfindung sind daher Mischungen aus Polyamidimiden, in 5-Stellung des Hydantoinringes mit Alkoxycarbonylmethylgruppen substituierten Polyhydantoinen und gegebenenfalls Aminen.

Die erfindungsgemäßen Mischungen können z.B. als Lacklösungen zur Herstellung von Überzügen verwendet werden.

Als Polyamidimide können aliphatisch-aromatische oder aromatische Polyamidimide der Formeln Ia und/oder b verwendet werden

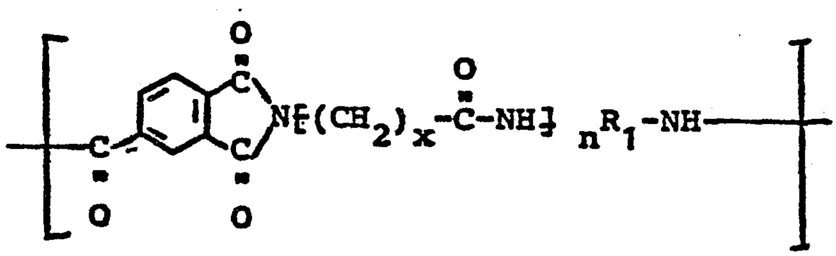

(Ia),

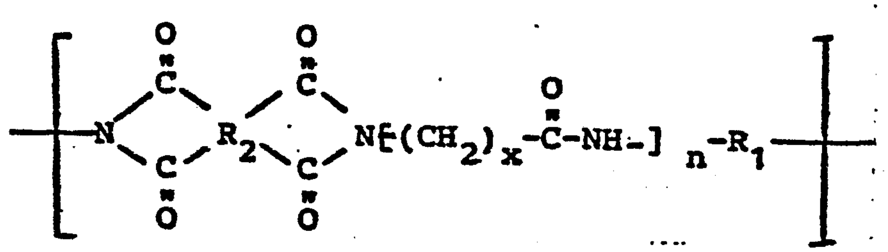

(Ib),

....

worin

$R_1$ einen $C_2$-$C_{20}$-Alkylen-, $C_5$-$C_{15}$-Cycloalkylen-, Phenylen- oder Naphthylenrest bedeutet, wobei diese Reste mit $C_1$-$C_4$-Alkylresten oder Halogen wie Cl, Br substituiert sein können,

$R_2$ einen tetravalenten, organischen Rest, wie einen aromatischen Rest mit 6 - 10 C-Atomen, aromatischaliphatischen mit 7 - 13 C-Atomen oder aliphatischen Rest mit 4 - 10 C-Atomen bedeutet,

x für eine ganze Zahl von 4 bis 12 und

n für die Zahl 0 oder 1, vorzugsweise 0 steht.

Bevorzugte Reste $R_1$ entsprechen den Formeln

a) $-(CH_2)_6-$

b) 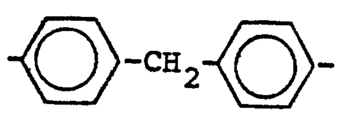

c) 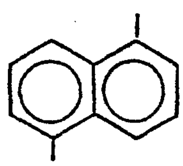

d) 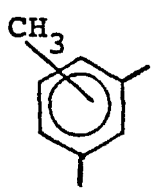

e) 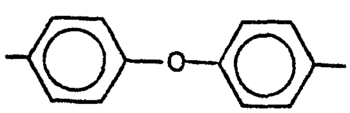

Bevorzugte Reste $R_2$ entsprechen den Formeln

a) 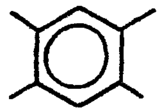

b) 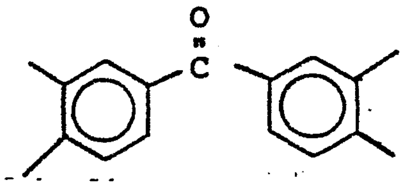

Die Herstellung dieser Polyamidimide kann nach bekannten Verfahren, z.B. aus aromatischen Polycarbonsäureanhydriden und Polyisocyanaten und aus aromatischen Polycarbonsäureanhydriden, Lactamen und Polyisocyanaten, (z.B. DE-OS 24 43 575, 24 43 576 und 17 70 202) erfolgen.

Erfindungsgemäß verwendbare Hydantoine sind in 5-Stellung des Hydantoinringes mit Alkoxycarbonylmethylgruppen substituiert. Sie entsprechen der Formel (II)

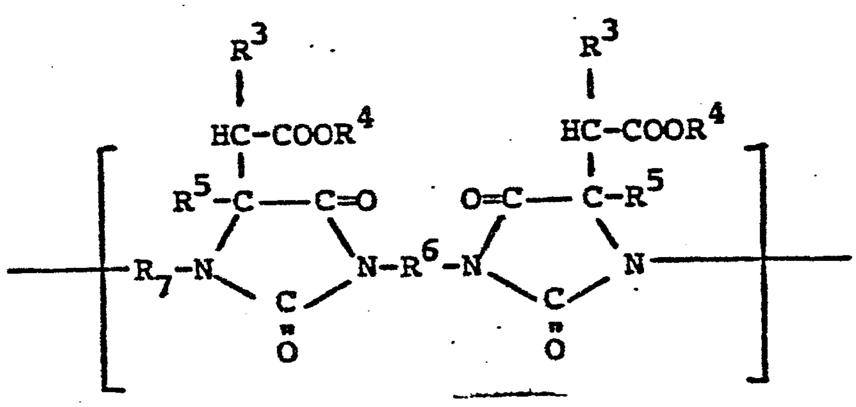 (II),

in der

$R^3$, $R^4$ und $R^5$ für Wasserstoff, $C_1$-$C_4$-Alkyl, das gegebenenfalls mit Halogen wie Cl und Br substituiert sein kann, steht,

$R^6$ und $R^7$ für gegebenenfalls mit Halogen wie Cl und Br und $C_2$-$C_3$-Alkylgruppen substituierte Reste wie $C_1$-$C_6$-Alkyl, $C_6$-$C_{14}$-Aryl, $C_7$-$C_{16}$-Aralkyl, $C_5$-$C_{10}$-Cycloalkyl und aromatische, ungesättigte oder gesättigte heterocyclische Reste mit insgesamt 10 Ringatomen, wobei bis zu drei Ring C-Atome durch Heteroatome wie N, O, S ersetzt sein können, stehen.

Bevorzugte Reste sind:

$R^3 = H$

$R_4 = C_1$-$C_4$-Alkyl

$R_5 = H$

$R_7 = -CH_2-CH_2-$, $-(CH_2)_6-$

$R_6 = -(CH_2)_6-$ , 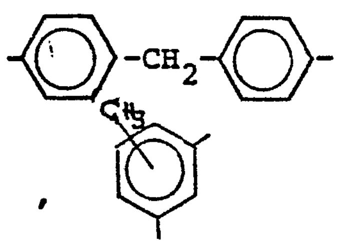 , 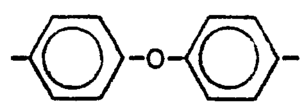

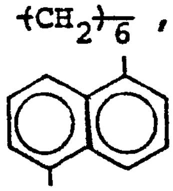 ,

Die Herstellung dieser Polyhydantoine kann nach bekannten Verfahren (z.B. DE-OS 17 20 624) erfolgen. Bei diesem Verfahren werden gegebenenfalls in situ aus Polyaminen und 1,2-Alkylendicarbonsäureestern Asparaginsäureester hergestellt und diese mit Polyisocyanaten unter nachfolgender Cyclisierung umgesetzt.

Zur Herstellung der erfindungsgemäßen Lacklösungen können gegebenenfalls Amine, z.B. Polyamine mit mehreren $NH_2$-Gruppen verwendet werden.

Erfindungsgemäß verwendbare Amine entsprechen der Formel (III)

$$R^8-(NH_2)_m \qquad (III),$$

in welcher

$R^8$ für einen m-wertigen $C_2$-$C_{20}$, vorzugsweise $C_2$-$C_{12}$-Alkyl-, $C_5$-$C_{20}$, vorzugsweise $C_5$-$C_{10}$-Cycloalkyl-, oder $C_7$-$C_{20}$- vorzugsweise $C_7$-$C_{15}$-Aralkylrest, steht, wobei diese Reste gegebenenfalls durch Heteroatome wie O und S unterbrochen sein können und

m für eine ganze Zahl von 2 bis 6, vorzugsweise 2 oder 3 steht.

Beispielsweise seien genannt: 1,2-Diaminoethan, 1,2-Diaminopropan, 1,4-Diaminobutan, 1,6-Diaminohexan, 1,4-Diaminocyclohexan, 5-Amino-1,3,3-trimethylcyclohexan-1-methanamin, Bis-(4-aminocyclohexyl)methan, Bis-aminomethyl-hexahydro-4,7-methano-indan, 1,3-Bisaminomethylbenzol, 2,5-Diamino-2,5-dimethylhexan und Trimethyl-1,6-hexandiamingemische.

Vorzugsweise seien genannt: 1,2-Diaminoethan, 1,4-Diaminobutan, 1,6-Diaminohexan, 5-Amino-1,3,3-trimethylcyclohexan-1-methanamin, Bis(4-aminocyclohexyl)methan. Die Amine können allein oder als Gemische verwendet werden.

Bei der Herstellung der erfindungsgemäßen Lacklösungen können die getrennt hergestellten Polyamidimide und Polyhydantoine in geeigneten Lösungsmitteln unter Rühren gemischt werden.

Soll die erfindungsgemäße Lacklösung Amine enthalten, kann beispielsweise das Polyhydantoin in Lösung mit Aminen im Temperaturbereich von 0 bis 200°C, vorzugsweise 50 bis 150°C umgesetzt werden. Anschließend wird die Polyamidimidlösung zugegeben. Die Umsetzung des Polyhydantoins mit dem Amin kann bis zu mehreren Tagen, vorzugsweise von 5 Minuten bis zu einer Stunde betragen.

Es kann das Polyamin der Lösung des Polyamidimids zugesetzt werden oder vor Zugabe des Amins die Lösungen des Polyhydantoins und des Polyamidimids gemischt und anschließend die Umsetzung mit dem Amin durchgeführt werden.

Die erfindungsgemäßen Lacklösungen enthalten 1 - 99 Gew.-%, vorzugsweise 60 - 90 Gew.-%, besonders bevorzugt 70 - 85 Gew.-% Polyamidimid 1 - 99 Gew.-%, vorzugsweise 10 - 40 Gew.-%, besonders bevorzugt 15 - 30 Gew.-% der Summe aus Polyhydantoin und Amin. Das Verhältnis Polyhydantoin zu Amin soll 0 bis 0,8 mol, vorzugsweise 0 bis 0,3 mol, besonders bevorzugt 0 bis 0,1 mol Amin zu 1 mol Formeleinheit Polyhydantoin betragen. Die Angabe Gew.-% bezieht sich dabei auf den Feststoffgehalt der jeweiligen Lacklösung.

Als Lösungsmittel für die erfindungsgemäßen Lacklösungen können die für die Herstellung der Polyamidimide und der Polyhydantoine verwendeten Lösungsmittel dienen.

Beispielsweise seien genannt: Amide wie Dimethylformamid, N-Methylpyrrolidon, Dimethylacetamid, Ether und Ester wie Glykolmonomethyletheracetat, Glykolmonoethyletheracetat, Alkohole wie Benzylalkohol, Ketone wie Cyclohexanon. Sie können einzeln oder im Gemisch eingesetzt werden. Vorzugsweise werden Dimethylformamid, Dimethylacetamid, N-Methylpyrrolidon und ein Gemisch aus Benzylalkohol und Glykolmonomethyletheracetat verwendet.

Den Lacklösungen können zusätzliche Verdünnungsmittel, z.B. Verschnitt-Lösungsmittel zugesetzt werden. Vorzugsweise werden Aromaten wie Xylole, Ester wie Butylacetat, Methylglykolacetat, Ethylenglykolacetat oder Ketone wie Methylisobutylketon und Alkylaromaten eingesetzt.

Den erfindungsgemäßen Bindemittelmischungen bzw. Lacklösungen können übliche Hilfsmittel zugesetzt werden, z.B. anorganische und organische Pigmente, vorzugsweise anorganische Pigmente, oberflächenaktive Substanzen, Antischaummittel, Thixotropierungsmittel, Trennmittel wie Siliconöle, Polytetrafluorethylen, Füllstoffe wie Talkum, Dolomit und Schwerspat. Als anorganische Pigmente können beispielsweise Titandioxid, Eisenoxide, Cadmiumpigmente oder deren Mischungen eingesetzt werden.

Die Herstellung von Beschichtungen mit den erfindungsgemäßen Mischungen kann durch Einbrennen der Lacklösungen bei erhöhter Temperatur von 150 bis 400°C, vorzugsweise von 200 bis 300°C, bei einer Einbrenndauer von 5 bis 60 Minuten, vorzugsweise von 10 bis 30 Minuten, erfolgen. Man kann hierbei zuerst bei niedriger Temperatur das Lösungsmittel verdampfen und anschließend bei höherer Temperatur aushärten.

Diese Lackierungen zeichnen sich durch Blasenfreiheit und Porendichtigkeit, auch bei höheren Schichtdecken, gute Haftung, besonders auf Metallen wie Kupfer, Aluminium und Eisen, gute Lösungsmittel- und Chemikalienbeständigkeit und hohe Elastizität aus. Weiterhin sind diese Lackierungen frei von weniger gesundheitsverträglichen Lösungsmittelrückständen, die z.B. bei Verwendung von Phenol und Kresolen als Lösungsmittel bei der Herstellung der Polyhydantoine und Polyamidimide, im eingebrannten Lack verbleiben können.

## Beispiele

### Beispiel 1

Herstellung der Polyhydantoinlösungen

a) In einer Rührapparatur mit Innenthermometer, Rührer und Destillationsbrücke werden 576 g (4 mol) Maleinsäuredimethylester in 1.670 g Dimethylformamid vorgelegt. Unter Rühren werden bei 5 - 10°C 232 g (2 mol) Hexamethylendiamin in 490 g Dimethylformamid zugetropft. Es wird auf Raumtemperatur (20 - 25°C) erwärmt und ca. 20 h bei dieser Temperatur nachgerührt. Anschließend werden bei Temperaturen unter 50°C 535 g (2,14 mol) 4,4'-Diisocyanatodiphenylmethan eingetragen und unter Rühren wie folgt aufgeheizt: 1 h 50°C, 1 h 100°C, 10 h 130 - 150°C, wobei Methanol abdestilliert.

Man erhält 3.350 g Lacklösung mit einem Feststoffgehalt von 34 % und einer Viskosität von = 176 mPas.

b) 1 kg einer nach Beispiel 1a)hergestellten Polyhydantoinlösung wird bei 130°C mit 23,2 g Hexamethylendiamin versetzt und 30 Minuten bei 130 - 150°C nachgerührt.

### Beispiel 2

a) Zu 1 kg einer Polyamidimidlacklösung, die durch Umsetzung von Trimellitsäureanhydrid mit 4,4'-Diisocyanatodiphenylmethan in einer Mischung aus N-Methylpyrrolidon und Dimethylacetamid (4 : 3) hergestellt wurde (Feststoffgehalt 33 %), werden unter Rühren 200 g einer Polyhydantoinlacklösunge nach Beispiel 1a) gegeben. Anschließend werden 6,0 g eines handelsüblichen Verlaufsmittels auf Basis eines Methylphenylsilikonharzes, 10 %ig in Xylol zugesetzt und bis zur Homogenität vermischt.

b) Zu 1 kg einer Polyamidimidlacklösung (siehe Beispiel 2a) werden unter Rühren 200 g einer aminmodifizierten Polyhydantoinlösung nach Beispiel 1b) gegeben. Anschließend werden 6,0 g eines Verdünnungsmittels (handelsübliches Verlaufsmittel auf Basis eines Methylphenylsilikonharzes, 10 %ig in Xylol), zugesetzt und bis zur Homogenität vermischt.

Die Lacke wurden auf Aluminiumbleche aufgespritzt und 10 Minuten bei 250°C eingebrannt. Die erhaltene Schichtdicke nach dem Einbrennen betrug 18 - 20 µm.

Die Lösungsmittel- und Chemikalienbeständigkeit der Lackierungen zeigt Tabelle 1. Zur Prüfung wurden auf die ausgehärteten Lackschichten mit Lösungsmitteln getränkte Wattebäusche gelegt und mit Glasschälchen abgedeckt.

Tabelle 1

Lösungsmittelbeständigkeit

| | Polyamidimid ohne Zusatz | Lack 1 a | Lack 2 a | Lack 2 b |
|---|---|---|---|---|
| Angriff nach Stunden | 0,5 2 24 48 | 0,5 2 24 48 | 0,5 2 24 48 | 0,5 2 24 48 |
| Dimethylformamid | 1 4 | 4 - | 1 4 | 1 3 |
| Methylenchlorid | 0 0 0 0 | 4 - - - | 0 0 0 0 | 0 0 0 0 |

0 = unverändert
1 = Spur erweicht
2 = erweicht
3 = stark erweicht
4 = gequollen

Die Prüfung der mechanischen Eigenschaften der Lacke sind in Tabelle 2 zusammengestellt.

Tabelle 2

| | Polyamidimid ohne Zusatz | Lack 1 a | Lack 2 a | Lack 2 b |
|---|---|---|---|---|
| Erichsen-Wert, mm nach DIN 53 156 | 8,4 | 8,4 | 8,6 | 8,5 |
| Bleistifthärte 20°C | 7 H | 7 H | 7 H | 7 H |

Tabelle 2 - Fortsetzung

| | Polyamidimid ohne Zusatz | Lack 1 a | Lack 2 a | Lack 2 b |
|---|---|---|---|---|
| Bleistifthärte 180°C[1)] | 7 H | 4 H | 7 H | 7 H |
| Schlagtiefung, inch x pd.[2)] | 46 | 45 | 54 | 54 |
| T-Bend-Test[3)] | 2 - 3 | 0 | 0 | 0 |

1) = nach DIN 46 453

2) = nach ASTM D 2794 (1/2 Zoll-Kugeldurchmesser, Blechrückseite)

3) = nach ECCA T 7

Patentansprüche

1. Mischungen aus Polyamidimiden, in 5-Stellung des Hydantoinrings mit Alkoxycarbonylgruppen substituierten Polyhydantoinen und gegebenenfalls Aminen.

2. Mischungen nach Anspruch 1, dadurch gekennzeichnet, daß als Polyamidimide aliphatisch-aromatische oder aromatische Polyamidimide der Formeln I a und/oder I b

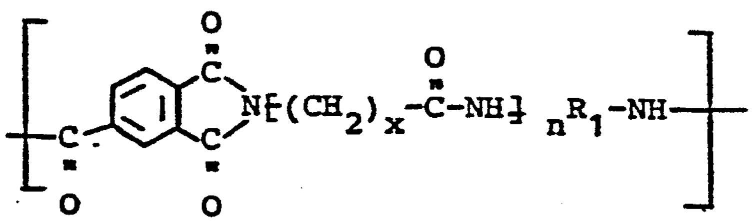

(I a),

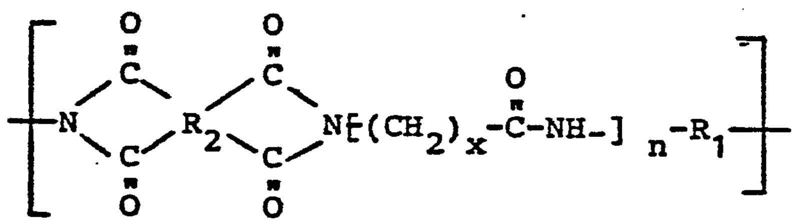

(I b),

worin

$R_1$ einen Alkylen-, Cycloalkylen-, Phenylen- oder Naphthylenrest bedeutet, wobei diese Reste mit Alkylresten oder Halogen substituiert sein können,

$R_2$ einen tetravalenten, organischen Rest,
x eine ganze Zahl von 4 bis 12 und
n eine ganze Zahl von 0 bis 1 bedeuten

und als in 5-Stellung des Hydantoinringes mit Alkoxycarbonylmethylgruppen substituierte Polyhydantoine der Formel II

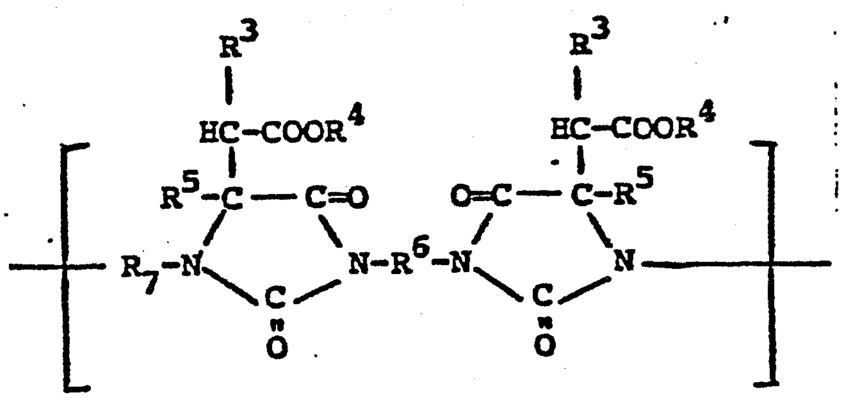

(II),

in der

$R^3$, $R^4$ und $R^5$ für Wasserstoff, $C_1$-$C_4$-Alkyl, das gegebenenfalls mit Halogen wie Cl und Br substituiert sein kann, steht,

$R^6$ und $R^7$ für gegebenenfalls mit Halogen wie Cl und Br und $C_2$-$C_3$ Alkylgruppen substituierte Reste wie $C_1$-$C_6$-Alkyl, $C_6$-$C_{14}$-Aryl, $C_7$-$C_{16}$-Aralkyl, $C_5$-$C_{10}$-Cycloalkyl und aromatische, ungesättigte oder gesättigte Heterocyclische Reste mit insgesamt 10 Ringatomen, wobei bis zu drei Ring C-Atome durch Heteroatome wie N, O, S ersetzt sein können, steht,

und gegebenenfalls Amine der Formel III

$$R^8-(NH_2)_m \qquad (III),$$

in welcher

$R^8$ für einen m-wertigen $C_2$-$C_{20}$-Alkyl-, $C_5$-$C_{20}$-Cycloalkyl-, oder $C_7$-$C_{20}$- Aralkylrest, steht, wobei diese Reste gegebenenfalls durch Heteroatome wie O und S unterbrochen sein können und

m für eine ganze Zahl von 2 bis 6, vorzugsweise 2 oder 3 steht,

verwendet werden.

3. Verfahren zur Herstellung der Lacklösung nach Anspruch 1, dadurch gekennzeichnet, daß die Komponenten gegebenenfalls bei erhöhter Temperatur gemischt werden.

4. Verwendung von Mischungen gemäß Anspruch 1 zur Herstellung von Lacklösungen und Bindemitteln.